# EUROPÄISCHE PATENTSCHRIFT

(11) **EP 1 234 716 B1**
(45) Veröffentlichungstag und Bekanntmachung des Hinweises auf die Patenterteilung: **10.10.2007**
(21) Anmeldenummer: 02450010.0
(22) Anmeldetag: 21.01.2002
(51) Int. Cl.: B60Q 1/076, F21V 14/06, B60Q 1/12

(54) **Fahrzeugscheinwerfer**
Vehicle headlight
Phare de véhicule

(30) Priorität: 21.02.2001 AT 2742001
(43) Veröffentlichungstag der Anmeldung: 28.08.2002
(73) Patentinhaber: Zizala Lichtsysteme GmbH, A-3250 Wieselburg (AT)
(72) Erfinder: Aichinger, Michael, 3620 Spitz an der Donau (AT); Tiefenbacher, Ewald, 3373 Kemmelbach (AT); Plank, Josef, 3251 Purgstall/Erlauf (AT)
(74) Vertreter: Matschnig, Franz

(56) Entgegenhaltungen:
- EP-A- 0 489 388
- EP-A- 0 860 650
- DE-A- 4 341 234
- DE-A- 19 621 254
- DE-U- 29 704 468
- FR-A- 2 760 418
- JP-A- 62 222 505
- US-A- 5 099 400
- US-B1- 6 186 651
- PATENT ABSTRACTS OF JAPAN Bd. 0165, Nr. 03 (M-1326), 16. Oktober 1992 (1992-10-16) & JP 4 184801 A (KOITO MFG CO LTD), 1. Juli 1992 (1992-07-01)
- PATENT ABSTRACTS OF JAPAN Bd. 0163, Nr. 25 (M-1280), 15. Juli 1992 (1992-07-15) & JP 4 092301 A (KOITO MFG CO LTD), 25. März 1992 (1992-03-25)

## Beschreibung

Die Erfindung betrifft einen Fahrzeugscheinwerfer für dynamisches Kurvenlicht mit zumindest einem Reflektor, zumindest einer dem zumindest einen Reflektor zugeordneten Lichtquelle zumindest einer um zumindest eine Verschwenkachse in Bezug auf den Reflektor verschwenkbaren Linse, wobei die Linse von einem Linsenhalter gehalten ist, welcher um die zumindest eine Verschwenkachse verschwenkbar ist und wobei die zumindest eine Verschwenkachse durch den Brennpunkt der Linse bzw. in geringem Abstand zu diesem verläuft.

Bei herkömmlichen Fahrzeugscheinwerfersystemen, wie sie üblicherweise zum Einsatz kommen, ist das Scheinwerfersystem in der Fahrzeugkarosserie in bezug auf diese fest angeordnet und erzeugt somit eine "starre" Lichtverteilung. Eine Mitbewegung bei einer Kurvenfahrt entsprechend dem Kurvenradius ist nicht vorgesehen. Dies hat den großen Nachteil, dass bei Kurvenfahrten die Fahrbahn schlechter ausgeleuchtet wird als bei einer Geradeausfahrt.

Aus der US 3,614,416 A ist ein Scheinwerfersystem für die Erzeugung eines Kurvenlichtes bekannt. Bei diesen Systemen wird die gesamte Lichteinheit, beispielsweise bestehend aus Reflektor, Lichtquelle, Linse und unter Umständen einer Blendenanordnung um eine Vertikalachse verschwenkt. Diese einfache Realisierung eines Scheinwerfers für Kurvenlicht hat allerdings den Nachteil, dass in Folge des Verschwenkens des gesamten Systems der dafür notwendige Bauraum sehr groß ist, der aber in modernen Karosserien aus Design- und anderen Gründen meist nicht zur Verfügung steht. Außerdem ist bei einem Verschwenken des gesamten Scheinwerfersystems eine große Masse zu bewegen, was entsprechend dimensionierte Antriebe notwendig macht, die entsprechend teurer als schwächer dimensionierte Antriebe sind. Schließlich ist eine große bewegliche Masse auch auf Stossbelastungen wesentlich empfindlicher, und die Lagerung muss daher entsprechend massiv ausgeführt werden.

Weiters sind Scheinwerfer zur Leuchtweitenregulierung bekannt, bei denen die gesamte Lichteinheit in einer vertikalen Richtung, d. h. auf- oder abwärts, verschwenkbar ist, wobei vergleichbare Nachteile wie bei den oben beschriebenen Scheinwerfern für Kurvenlicht auftreten.

Aus der DE 37 29 515 A1 ist beispielsweise ein Fahrzeugscheinwerfer mit einer Linse bekannt, welche um eine horizontal verlaufende Achse, welche normal auf die optische Achse steht, verschwenkbar ist. Dazu ist die Linse in einem Linsenhalter gehalten, der um die horizontale Achse verschwenkbar ist. Die Verschwenkachse befindet sich dabei zwischen der Linse und einem Abdeckschirm, wobei allerdings auf die genauen Anordnung der Verschwenkachse nicht eingegangen wird.

Mit dem beschriebenen Scheinwerfer ist es möglich, sowohl Fern- als auch Abblendlicht zu erzeugen. Dazu ist die Linse wie oben beschrieben, geringfügig um die horizontale Achse verkippbar und zusätzlich linear in Höhenrichtung bewegbar. Auf diese Weise kann das Maximum der Lichtintensität abgesenkt bzw. angehoben werden, je nachdem, welche Lichtverteilung gewünscht ist.

Eine solche Linsenanordnung eignet sich allerdings nicht dazu, einen Lichtstrahl in eine bestimmte Richtung abzustrahlen, beispielsweise um die Leuchtweite an die Fahrzeuggeschwindigkeit anzupassen, da bei der gezeigten Linsenverschwenkung das gesetzlich vorgeschriebene Lichtbild nicht mehr erzeugbar wäre, insbesondere, da es bei einem gezeigten Verkippen (Verschwenken) um einen größeren Winkelbereich rasch zu Verzerrungen im Lichtbild kommen würde, die einerseits eine schlechte Ausleuchtung der Fahrbahn ergeben würden, und andererseits wären die gesetzlichen Vorschriften nicht eingehalten.

Die JP 09-277974 A zeigt einen Scheinwerfer für ein Motorrad, bei dem eine Linse um eine in etwa parallel zu der optischen Achse verlaufende, unterhalb dieser angeordnete Achse verschwenkbar ist. Auf diese Weise kann bei der Kurvenfahrt eines Motorrads und der damit verbundenen seitlichen Neigung die Linse entgegen dieser Neigung "verdreht" werden, sodass nach wie vor ein optimales Lichtbild gegeben ist. Allerdings ist mit dieser Anordnung einer Anpassung des Lichtbildes an die Fahrzeuggeschwindigkeit bzw. ein Mitlenken des Lichtes in Kurven, wie es bei Automobilen gewünscht ist, nicht möglich.

Ein eingangs erwähnter Scheinwerfer ist weiters aus der JP 62 222505 A bekannt. Bei diesem Scheinwerfer verläuft die horizontale Verschwenkachse durch den Brennpunkt der Linse. Durch die spezielle Anordnung der Verschwenkachse ist gewährleistet, dass bei einem Auf - und Abverschwenken der Linse nur geringe Verzerrungen im Lichtbild auftreten und somit auch die gesetzlichen Anforderungen an das Lichtbild über den gesamten Verschwenkbereich erfüllt sind.

Es ist eine Aufgabe der Erfindung, einen eingangs genannten Scheinwerfer derart zu adaptieren, dass er für dynamisches Kurvenlicht einsetzbar ist.

Diese Aufgabe wird durch die Merkmale des Anspruchs 1 gelöst.

Mit dem erfindungsgemäßen Scheinwerfer ist es auf einfache Weise lediglich durch ein seitliches Verschwenken der Linse möglich, die Lichtverteilung entsprechend dem Straßenverlauf anzupassen, Durch die spezielle Anordnung der Verschwenkachse ist gewährleistet, das5 bei dem Verschwenden nur geringe Verzerrungen im Lichtbild auftreten und somit auch die gesetzlichen Anforderungen an das Lichtbild über den gesamten Veisehwenkbereich erfüllt sind.

Im Sinne einer einfachen Herstellung kann es sein, wenn der Linsenhalter und die Linse einstückig ausgebildet sind.

Bei einer erprobten Ausführungsform der Erfindung ist die Linse, ausgehend von einer Mittelstellung für Geradeausfahrt, beiderseits in einem Winkelbereich von 0° bis 20° um die vertikale Horizontalverschwenkachse verschwenkbar. In diesem Verschwenkbereich kann ein gesetzeskonformes Lichtbild mit nur geringen Verzerrungen erreicht werden.

Eine Variante der Erfindung zeichnet sich dadurch aus, dass der Linsenhalter in zumindest einer Führung um die zumindest eine Achse verschiebbar gelagert ist.

Zweckmäßigerweise hat dabei die Führung die Form eines Kreisbogens, dessen Mittelpunkt auf der Schwenkachse liegt, wobei die Führung in einer Ebene liegt, deren Normalvektor parallel zu der Schwenkachse verläuft. Bei einem Verschieben des Linsenhalters in dieser Führung wird durch die Kreisbogenform der Linsenhalter und somit die Linse um die Verschwenkachse, beispielsweise um eine Vertikalachse horizontal "verschwehkt", wodurch das Licht in die gewünschte Richtung gerichtet wird.

Günstig ist es dabei, wenn der Linsenhalter zumindest eine Kufe hat, welche entsprechend der Form der Führung ausgebildet ist und in dieser in Eingriff verschiebbar gelagert ist.

Bei einer anderen Ausführungsform der Erfindung ist der Linsenhalter an dem zumindest einen Reflektor und/oder einem Tragelement drehbar befestigt.

Zweckmäßigerweise hat dabei der Linsenhalter zumindest einen von der Linse im wesentlichen entgegen der Lichtrichtung gerichteten Arm, welcher an dem Reflektor/Tragelement über zumindest eine Stift-Loch-Verbindung um die zumindest eine Verschwenkachse verschwenkbar befestigt ist.

Bei einer Ausführungsform der Erfindung, bei der die Linse um zwei Verschwenkachsen verschwenkbar ist, ist der Linsenhalter in zumindest einer Führung um eine Verschwenkachse verschwenkbar, wobei die Führung an einem Tragegestell befestigt oder mit diesem einstückig ausgebildet ist, welches um eine Achse verschwenkbar ist, die normal auf die Verschwenkachse für die Führung verläuft.

Bei einem Scheinwerfer für dynamisches Kurvenlicht, bei dem auch die Leuchtweite regulierbar ist, ist die Verschwenkachse eine Vertikalachse/eine in einer Ebene normal auf die optische Achse liegende Horizontalachse, und die Drehachse für das Tragegestell ist eine in einer Ebene normal auf die optische Achse liegende Horizontalachse/ eine Vertikalachse.

Dabei ist es wiederum günstig, wenn die Führung die Form eines Kreisbogens hat, dessen Mittelpunkt auf der Verschwenkachse liegt, und wobei die Führung in einer Ebene liegt, deren Normalvektor parallel zu der Schwenkachse verläuft.

Außerdem hat vorteilhafterweise der Linsenhalter zumindest eine Kufe, welche entsprechend der Form der Führung ausgebildet ist und in dieser in Eingriff verschiebbar gelagert ist.

Bei einer weiteren Ausführungsform der Erfindung, die sowohl ein Verschenken um beispielsweise eine horizontale als auch eine vertikale Achse erlaubt, ist der Linsenhalter an dem zumindest einen Reflektor und/oder einem Tragelement drehbar befestigt, der Linsenhalter hat zumindest einen von der Linse im wesentlichen entgegen der Lichtrichtung gerichteten Arm, welcher an dem Reflektor/Tragelement über zumindest eine Stift-Loch-Verbindung um eine Verschwenkachse verschwenkbar verbunden ist, und der zumindest eine Stift oder das zumindest eine Loch ist an einem Tragegestelle befestigt oder mit diesem einstückig ausgebildet, wobei das Tragegestell um eine auf die Verschwenkachse normale Achse verschenkbar ist.

Bei einer einfachen Realisierung dieser Ausführung ist der zumindest eine Reflektor und/oder ein Trageelement zumindest bereichsweise als Kugelfläche ausgebildet ist, der Linsenhalter zumindest einen nach hinten springenden Arm hat, welcher in einem mit der Kugelfläche zusammenwirkenden Bereich des Arms konzentrisch ausgebildet ist, und der zumindest eine Arm über eine Stift-Schlitz-Verbindung horizontal und vertikal verschwenkbar gelagert ist.

Gesetzliche Anforderungen an das Lichtbild können auf einfache Weise erfüllt werden, wenn der Mittelpunkt der Kugelfläche und der mit dieser zusammenwirkende Bereich des Ames auf einer Vertikalen durch den Brennpunkt der Linse oder nahe dieser Geraden liegt.

Eine Verschwenkung des Linsenhalters erfolgt mit zumindest einem Antrieb.

Dabei kann der Antrieb ein Schrittmotor oder Gleichstrommotor sein, aber auch beispielsweise die Verwendung eines Servomotors ist möglich. Im Prinzip sind aber auch andere Antriebsvarianten denkbar, etwa Dreh- oder Hubmagnete oder piezomechanische Antriebe.

Bei verschiedenen Antrieben ist es günstig, wenn der Linsenhalter mit dem Antrieb über ein Getriebe verbunden ist etwa um die Verschwenkgeschwindigkeit oder die Verschwenkgenauigkeit entsprechend anzupassen.

Um eine exakte Steuerung der Verschwenkbewegung der Linse zu ermöglichen, ist zur Ermittlung der Verschwenkposition der Linse zumindest ein Sensor vorgesehen.

Vorteilhafterweise besteht der Sensor aus zumindest zwei Sensorelementen, wobei ein erstes Sensorelement fest mit dem Linsenhalter oder an einem mit diesem verbundenen Element angeordnet ist.

Zur Ermittlung, ob sich die Linse beispielsweise links oder rechts oder oberhalb/unterhalb einer Ausgangsposition befindet, ist bei einer erprobten Ausführung der Sensor ein digitaler Sensor.

Im folgenden ist die Erfindung an Hand der Zeichnung näher erläutert. In dieser zeigen
- Fig. 1: eine perspektivische Ansicht einer ersten Ausführungsform eines erfindungsgemäßen Scheinwerfers für Kurvenlicht von schräg oben,
- Fig. 2: eine perspektivische Ansicht des Scheinwerfers nach der Fig. 1 von schräg unten,
- Fig. 3: eine perspektivische Ansicht von schräg oben der für die Erfindung relevanten Bauteile des Scheinwerfers nach den Fig. 1 und 2,
- Fig. 4: eine perspektivische Ansicht einer weiteren Ausführungsform eines erfindungsgemäßen Scheinwerfers für Kurvenlicht,
- Fig. 5: eine perspektivische Ansicht des Scheinwerfers nach der Fig. 4 von schräg unten,
- Fig. 6: eine perspektivische Ansicht eines Scheinwerfers mit einer sowohl um eine vertikale als auch horizontale Achse verschwenkbaren Linse,
- Fig. 7: eine perspektivische Unteransicht eines Scheinwerfers nach der Fig. 6,
- Fig. 8: eine perspektivische Rückansicht eines Scheinwerfers nach der Fig. 6 oder Fig. 7,
- Fig. 9: eine Unteransicht eines Scheinwerfers nach der Fig. 6, und
- Fig. 10: noch einen Scheinwerfer nach der Fig. 1 mit einem digitalen Sensor.

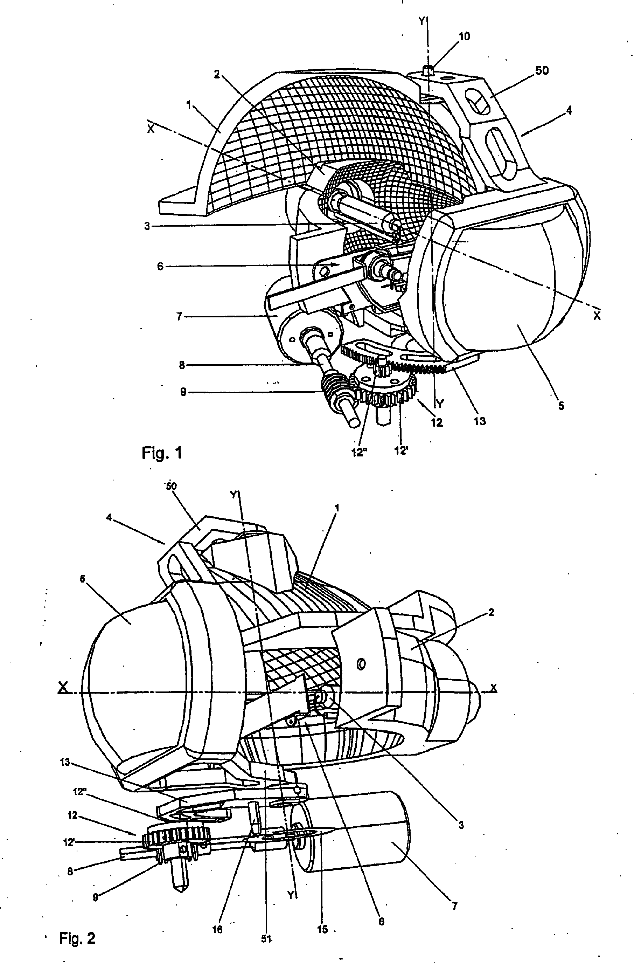

Die Fig. 1 zeigt einen Scheinwerfer für dynamishes Kurvenlicht, bestehend aus einem Reflektor 1, 2, einer Lichtquelle 3 einer in Lichtrichtung vor dem Reflektor 1, 2 angeordneten Linse 5 sowie einer zwischen Linse 5 und Reflektor 1, 2 befindlichen Blendenanordnung, die in der gezeigten Ausführungsform aus einer feststehenden und einer an dieser in Höhenrichtung verstellbaren Blende besteht. Die Blendenanordnung dient zum Umschalten zwischen einer Abblendlicht- und einer Fernlichtverteilung, der Erfindungsgedanke ist aber nicht an das Vorhandensein einer Blendenanordnung gebunden und es kann der Scheinwerfer auch ohne eine solche Blendenanordnung realisiert sein, etwa zur Erzeugung einer Fernlichtverteilung, Verstellmechanismen für eine solche Blendenanordnung sind bekannt und aus oben genannten Gründen und zwecks Übersichtlichkeit der Figuren in diesen nicht näher dargestellt und auch nicht näher besprochen. Bei der verwendeten Linse 5 handelt es sich üblicherweise um eine Sammellinse, bei gewissen speziellen Anwendungen kann aber auch eine Zerstreuungslinse zum Einsatz kommen.

Wie der Fig. 2 außerdem zu entnehmen ist, ist der Reflektor in der gezeigten Form zweigeteilt, in zwei Reflektorbereiche 1, 2; auch darauf soll hier nicht näher eingegangen werden, da es sich um für die Erfindung unwesentliche Details handelt. Zur Klarstellung sei hier lediglich angeführt, dass es sich bei dem Scheinwerfer um einen reinen Abblend- oder Fernlichtscheinwerfer, um einen kombinierten Scheinwerfer oder etwa auch um einen Nebelscheinwerfer handeln kann.

Die Linse 5 ist von einem Linsenhalter 4 gehalten, der in der gezeigten Ausführungsform einen oberen und einen unteren Arm 50, 51 aufweist, mittels welcher der Linsenhalter 4 und somit auch die Linse 5 um eine im wesentlichen vertikal verlaufende Horiaontalschwenlcachse Y verschwenkbar ist. Üblicherweise ist der Linsenhalter 4 als von der Linse 5 getrenntes Bauelement ausgebildet, wie dies auch in der Zeichnung dargestellt ist, und die Linse 5 ist auf geeignete, dem Fachmann hinlänglich bekannte Art und Weise fest mit dem Linsenhalter 4 verbunden. Die Linse besteht üblicherweise aus Glas, und der Linsenhalter ist in der Regel aus einem Metall oder Kunststoff gebildet. Im Rahmen der Erfindung ist es aber auch denkbar, dass - obwohl durchgehend die Terminologie Linsenhalter - Linse verwendet wird - der Linsenhalter und die Linse einstückig ausgebildet sind. Dies könnte insbesondere dann der Fall sein, wenn etwa die Linse aus Kunststoff gebildet ist, sodass auf einfache Weise diese einstückige Herstellung möglich ist .

Bei der in Fig. 1 und Fig. 2 gezeigten Ausführungsform des erfindungsgemäßen Scheinwerfers ist der obere Arm 50 des Linsenhalters 4 an einer Außenseite des Reflektors 1 und der untere Arm 51 an einem nicht dargestellten Trageelement für den Reflektor drehbar in einem im wesentlichen horizontalen Winkelbereich gelagert ist. Grundsätzlich ist es für das von dem Scheinwerfer in einem vor dem Fahrzeug liegenden Bereich erzeugte Lichtbild vorteilhaft, wenn die Horizontalschwenkachse Y vertikal verläuft, der Verschwenkbereich sich also in einer Horizontalebene bewegt. Mit dem Ausdruck "im wesentlichen" soll zum Ausdruck gebracht werden, dass aber auch Neigungen dieser Achse Y akzeptabel sind, um ein zufriedenstellendes Lichtbild zu erzeugen, wobei darauf zu achten ist, dass dieses den gesetzlichen Bestimmungen eines Landes oder einer Region, wie etwa der Europäischen Union, genügt. Insbesondere ist dabei darauf zu achten, dass keine Blendung für den Gegenverkehr entsteht.

Nochmals sei hier darauf verwiesen, dass die besten Ergebnisse für das Lichtbild bei einem vertikalen Verlauf der Schwenkachse Y erzielt werden. Etwa in Folge von Ferdgungstoleranzen und Toleranzen beim Einbau des Scheinwerfers in ein Fahrzeug werden in der Praxis solche Abweichungen häufig auftreten. Eine Möglichkeit, diesem Problem zu begegnen, besteht beispielsweise darin, die Lichteinheit an ihrem Tragegestell mittels Einstellschrauben verstellbar zu befestigen, sodass etwa noch nachträglich der Scheinwerfer entsprechend eingestellt werden kann.

Die drehbare Lagerung des Linsenhalters 4 erfolgt in der gezeigten Form über Stift-Loch-Verbindungen 10, 11, wobei der Stift 10 als Drehachse ausgebildet ist und die Arme 50, 51 entsprechend an diese Drehachse ausgebildete Ausnehmungen bzw. Löcher 11 aufweisen. Diese Art der Lagerung ist in der Zeichnung insbesondere an Hand des oberen Armes 50 gut zu erkennen, für den unteren Arm 51 ist die entsprechende Ausgestaltung in der Zeichnung verdeckt dargestellt. Grundsätzlich kann aber die Anordnung Stift-Loch auch umgekehrt sein, d. h. dass der Stift an dem Arm angeordnet ist und sich das entsprechende Loch in dem Reflektor oder Tragelement befindet, und weiters ist es auch möglich, dass die Arme 50, 51 sowohl oben als auch in einem unteren Bereich lediglich an dem Reflektor oder lediglich an dem Trägerelement angreifen.

Durch die oben beschriebene beispielhafte Ausgestaltung der Erfindung ist es nun auf einfache Weise möglich, die Linse 5 in einem bestimmten horizontalen Winkelbereich ausgehend von einer Ausgangsstellung für Geradeausfahrt nach links und rechts zu verschwenken. Damit kann die Lichtverteilung optimal an den Straßenverlauf angepasst werden, insbesondere bei Kurvenfahrten. So kann beispielsweise entsprechend dem Lenkeinschlag die Linse 5 verschwenkt werden, und so die Lichtverteilung gesteuert werden.

Damit gute Ergebnisse für die Lichtverteilung, d. h. insbesondere eine scharfe Abbildung der Hell-Dunkel-Grenze auch bei einem Verschwenken der Linse erzielbar sind, ist es günstig, wenn die Horizontalschwenkachse Y in der Nähe des reflektorseitigen Brennpunktes der Linse 5 oder unmittelbar durch diesen verläuft. In diesem Fall ist ein Verschwenkbereich von ± 15° mit nur geringen Verzerrungen im Lichtbild realisierbar, sodass bei einer Verwendung des Scheinwerfers als Abblend-, Fern- oder Nebelscheinwerfer die gesetzlichen Bestimmungen für die Lichtverteilung problemlos zu realisieren sind. Ist der Scheinwerfer hingegen nur als Zusatzscheinwerfer gedacht, mit dem etwa in einer Kurvenfahrt "lediglich" zusätzliches Licht in von dem normalen Hauptscheinwerfer nicht beleuchteten Bereichen der Kurve erzeugt werden soll, so können die Verschwenkbereiche der Linse auch mehr als ± 20° betragen.

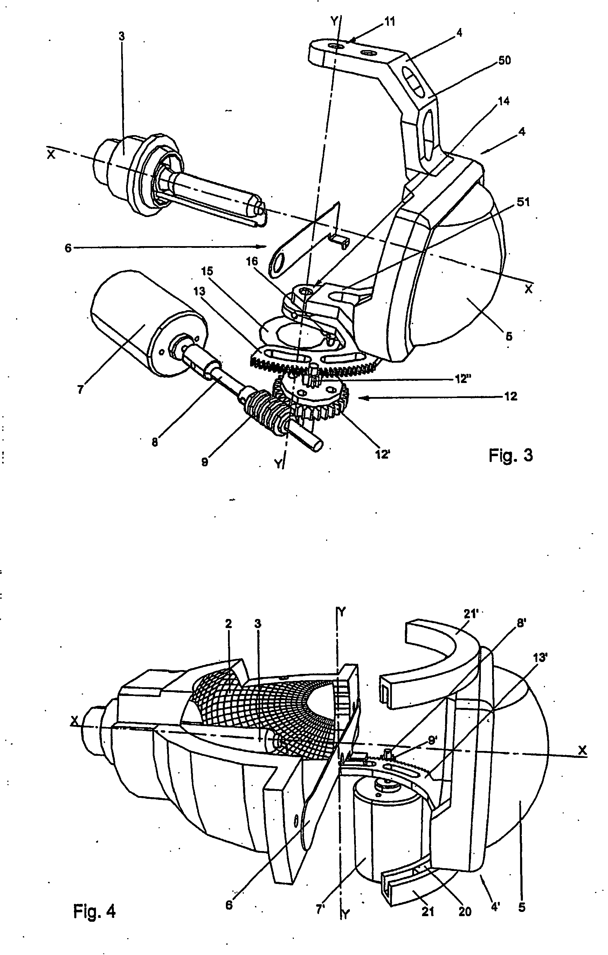

Wie den Figuren 1 und 2, besonders gut aber der Fig. 3 zu entnehmen ist, kann die Verschwenkung des Linsenhalters 4 und somit der Linse 5 mit einem Antrieb 7, beispielsweise einem Schritt-, Gleichstrom oder Servomotor erfolgen. In den Figuren handelt es sich um einen Schritt- oder Gleichstrommotor 7, der über ein Getriebe den Linsenhalter 4 bewegt. Dazu ist an einer Antriebswelle 8 des Motor 7 eine Schnecke 9 verdrehfest angeordnet bzw. sind Antriebswelle und Schnecke einstückig ausgebildet, und die Schnecke 9 treibt eine Getriebezwischenstufe 12 an. Die Schnecke treibt dabei über ein erstes Zahnrad 12' die Getriebestufe 12 an und diese über ein weites Zahnrad 12" einen Zahnkranz 13, der in der gezeigten Ausführungsform mit dem unteren Arm 51 des Linsenhalters 4 fest verbunden oder mit diesem einstückig ausgebildet ist. Die Getriebezwischenstufe 12 ist insbesondere bei einem Einsatz von Gleichstrommotoren notwendig, da diese mit hohen Drehzahlen im Bereich von 3000 - 12000 Umdrehungen/min. laufen, was dazu führen würde, dass der Linsenhalter in kürzester Zeit gegen in der Zeichnung nicht dargestellte, die Verschwenkbewegung des Linsenhalters begrenzende Anschläge bewegt würde. Dies wird durch den Einsatz einer entsprechenden Getriebezwischenstufe 12 vermieden, denn mit der Zwischenstufe 12 kann die Verstellgeschwindigkeit richtig gestaltet werden und auch der Schwenkwinkel möglichst stufenlos geregelt werden, was häufig bei Schrittmotoren notwendig ist, die oftmals ohne Getriebezwischenstufe 12 unmittelbar in einem Schritt zu einem Verschwenken des Linsenhalters 4 von 5° - 20° führen würden.

Bei Verwendung von Schrittmotoren 7, insbesondere von sogenannten Mikro-Schrittmotoren, ist es auch vorstellbar, dass man an einer mit dem Linsenhalter 4 verbundenen Drehachse ein Zahnrad anbringt und dieses direkt mit einer Schnecke der Antriebswelle des Motors antreibt, wobei in diesem Fall das von der Schnecke angetriebene Zahnrad schrägverzahnt ist.

Eine weitere Möglichkeit stellt der Einsatz von Linearschrittmotoren dar. Dabei handelt es sich um eine Abwandlung der üblichen, rotierenden Schrittmotoren, bei denen durch eine im Motor angebrachte Gewindespindel die Drehbewegung in eine Linearbewegung umgewandelt wird. Wird ein solcher Linearschrittmotor als Antriebselement eingesetzt, so wird dieser drehbar im Scheinwerfer, beispielsweise am Reflektor oder Tragrahmen befestigt, und eine Stellstange des Motors greift an einen mit dem Linsenhalter verbundenen Hebel an.

Grundsätzlich erweist sich vom technischen Standpunkt die Verwendung von Servomotoren als besonders günstig, da man mit diesen den Linsenhalter einfach und direkt über ein Gestänge antreiben kann, und sowohl die Genauigkeit der Verschwenkbewegung als auch die Verschwenkgeschwindigkeit gegeben sind. Servomotoren weisen aber den Nachteil auf, dass sie relativ teuer sind und somit zu einer Verteuerung des gesamten Scheinwerfers führen.

Wichtig für ein zuverlässiges, gesetzeskonformes Funktionieren des Fahszeugscheinwerfers ist es, dass die Linse 5 bei der Verschwenkbewegung zuverlässig und exakt in der jeweils gewünschten Winkelposition positioniert ist und nicht in einem davon abweichenden Bereich. Dies gilt besonders im Fehlerfall des Motors, wo die Position der Linse links/rechts von der optischen Achse erkannt werden muss, sodass mittels eines Sicherheitsmechanismus die Blendung des Gegenverkehrs verhindert werden kann. Besonders einfach lässt sich beispielsweise ein Schrittmotor positionieren, indem anfangs, d. h. beispielsweise vor Inbetriebnahme des Scheinwerfers, eine Referenzierung des Motors durchgeführt wird. Die Referenzposition liegt dabei vorteilhafterweise an der linken oder rechten Endposition des Verschwenkbereiches. In diesem Fall ist es günstig, die Referenzierung etwa beim oder unmittelbar nach dem Einschalten der Zündung durchzuführen, da dann keine Gefahr der Blendung besteht.

In Folge von Stößen während einer Autofahrt etc. besteht natürlich die Gefahr von Schrittverlusten des Motors, die unweigerlich dazu führen, dass nach einer gewissen Zeitspanne die Linsenposition um einen nicht mehr tolerierbaren Wert von der Sollposition abweicht. Um dies zu vermeiden, ist es im Falle eines oben beschriebenen Motors, der einer Referenzierung unterzogen wird, notwendig, einen entsprechend dimensionierten, massiv ausgelegten Motor zu verwenden, so dass Schrittverluste vermieden werden.

Eine andere Möglichkeit, bei der eine Referenzierung nicht notwendig ist, besteht in der Positionierung des Linsenhalters 4 unter Verwendung eines Positionssensors 15, 16, wie dies der Figur 3 zu entnehmen ist. Ein erstes Sensorelement, ein Abtaster 16, ist an dem unteren Arm 51 des Linsenhalters 4 bzw. an dem mit diesem verbundenen Zahnkranz 13 fest verbunden, während ein zweites Sensorelement 15 beispielsweise mit dem Reflektor oder einem Trägerelement für den oder die Reflektoren fest verbunden ist, sodass sich bei einer VerSchwenkung des Linsenhalters 4 das erste Sensorelement 16 relativ zu dem zweiten Sensorelement 15 bewegt. In dem in der Figur 3 gezeigten Beispiel ist der Sensor als Potentiometer ausgeführt, wobei über einen Schleifkontakt zwischen dem Abtaster 16 und dem zweiten Sensorelement, einer Widerstandsbahn 15, je nach Position des Abtasters 16 ein unterschiedlicher elektrischer Widerstand erzeugt wird, der entsprechend gemessen, einer Auswerteeinheit zugeführt und von dieser in eine Positionsangabe der Linse 5 umgesetzt wird.

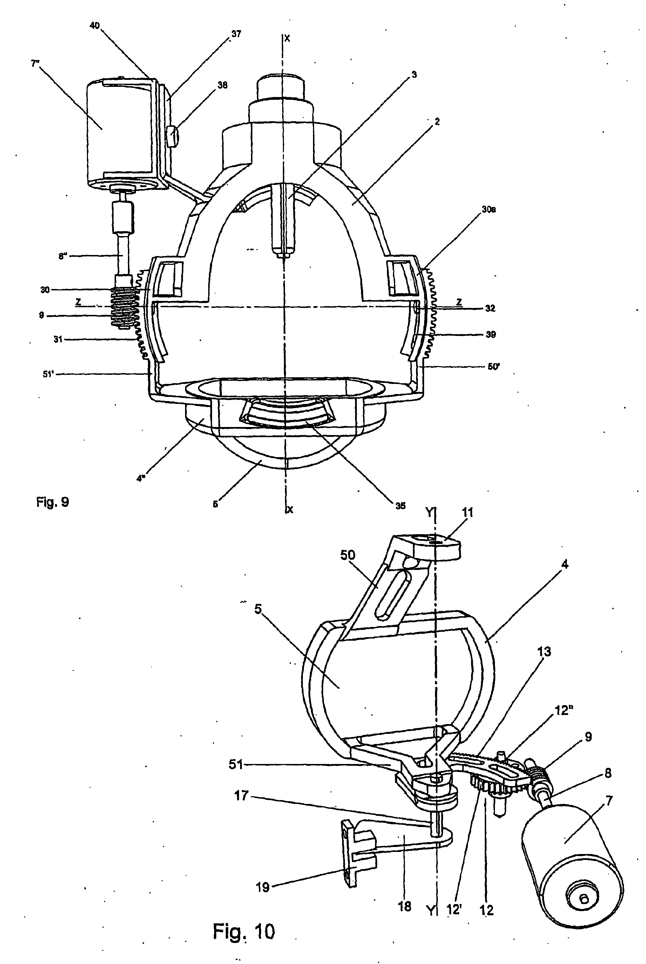

Schließlich besteht auch noch die nicht in der Zeichnung dargestellte Möglichkeit der Verwendung eines induktiven Sensors oder eines digitalen Sensors, wie er beispielsweise in der Fig. 10 gezeigt ist. Der digitale Sensor kann beispielsweise als Gabellichtschranken oder Hallsensor 19 mit einer geeigneten Kodierscheibe 18, die mit der Linse 5 verbunden ist, ausgeführt sein. Mit einem solchen Sensor lässt sich feststellen, ob sich der Halter 4 bzw. die Linse 5 rechts oder links von der Mittelstellung befindet, und bei einem Auftreten eines Fehlers kann die Linse 5 in die Mittelstellung gebracht werden, sodass zumindest die Blendung des Gegenverkehrs durch eine fehlerhaft verschwenkte Linse ausgeschaltet ist. Bei Verwendung eines solchen Sensors wird nach dem Einschalten ausgehend von der festgestellten Position - rechts oder links der Mittelstellung - die Linse in Richtung Mitte geschwenkt. Sobald sich der Zustand des Sensors ändert ist die Mitte erreicht. Zu diesem Zeitpunkt wird in einer ansteuernden Elektronik ein Referenzzähler aktiviert, welcher die Schritte ausgehend von dieser Mittelstellung zählt. Prinzipiell muss auch bei dieser Methode sichergestellt sein, dass kein Schrittverlust auftritt, wie etwa wie oben beschrieben bei einem Schrittmotor ohne Sensor. Da im Fahrbetrieb jedoch ständig nach links und rechts geschwenkt wird und damit die Linse regelmäßig die Mittelposition durchquert, kann immer zu diesem Zeitpunkt der Wert des Referenzzählers überprüft werden. Insbesondere ist darauf zu achten, dass ein Zustand, in dem als Sollwert für die Linse "Rechts (Links) der Mittelposition" vorgegeben ist, hingegen das Signal des Sensor "Links (Rechts) der Mittelposition" ausgibt, auf jeden Fall zu vermeiden ist, da dieser einen fehlerhaften Zustand darstellt, in welchem eine Blendung des Gegenverkehrs auftritt.

Die hier an Hand der Zeichnung dargestellten Möglichkeiten betreffend die Positionierung bzw. die Überwachung der momentanen Position der Linse sind sinngemäß auch auf die im folgenden beschriebenen Scheinwerfer anwendbar. Auch sind die vorgestellten Möglichkeiten nicht auf eine Verschwenkbewegung der Linse um eine Vertikalachse eingeschränkt, sondern die gezeigten und beschriebenen Sensoren sind bei geeigneter Anordnung für die Feststellung der Verschwenkposition einer Linse um eine beliebige Achse verwendbar.

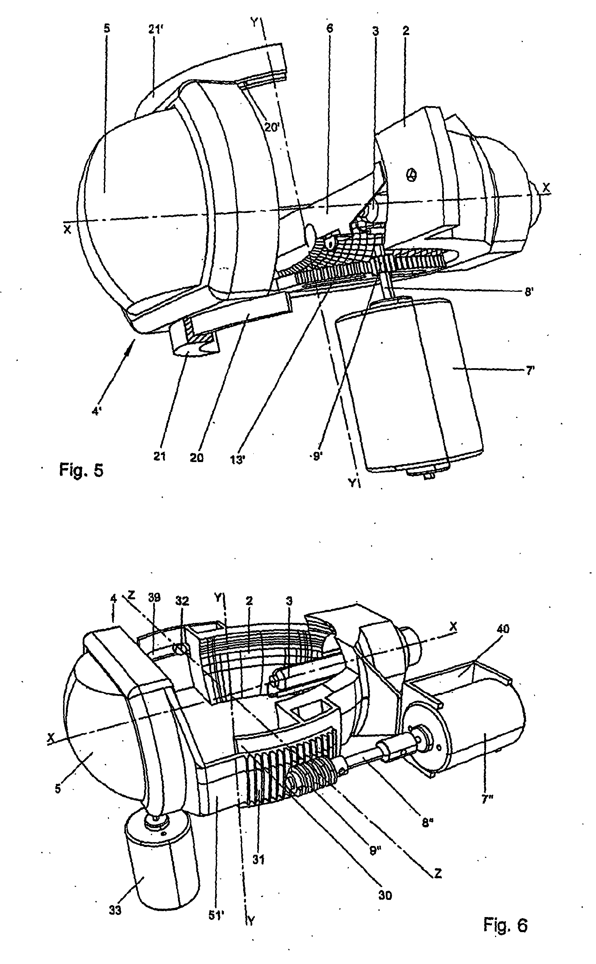

In den Figuren 4 und 5 ist eine weitere Ausführungsform eines Scheinwerfers für Kurvenlicht dargestellt, bei der die Linse 5 wiederum um eine im wesentlichen durch den reflektorseitigen Brennpunkt der Linse - der sich in der Zeichnung als Schnittpunkt der optischen Achse X mit der Vertikalachse Y ergibt verlaufende, im wesentlichen vertikale Horizontalschwenkachse Y verschwenkbar ist. Die Linse 5 ist dabei wieder in einem Linsenhalter 4' gehalten bzw. einstückig mit diesem ausgebildet. Gemäß der gezeigten Ausführung weist der Linsenhalter 4' an in einem unteren sowie einem oberen Bereich Kufen 20, 20' auf, die jeweils in eine Führungsschiene 21, 21' eingreifen. Die Führungsschienen 21, 21' ebenso wie die Kufen 20, 20' weisen im wesentlichen Kreisbogenform auf, wobei der Kreisbogen in einer im wesentlichen horizontal verlaufenden Ebene liegt und der Kreismittelpunkt auf einer durch den Brennpunkt der Linse verlaufenden Vertikalachse liegt. Die untere Kufe 20 ist mit einem Zahnkranz 13 verbunden, der mit einem Zahnrad 9' zusammenwirkt, welches über einen Antrieb 7' und eine Antriebswelle 8' den Linsenhalter 4' antreibt, sodass dieser in seiner Führung um einen bestimmten Winkel um die Schwenkachse Y nach links bzw. rechts verschwenkbar ist.

Die Führungen 21, 21' können beispielsweise wiederum an einem Reflektor befestigt sein oder auch an einem nicht dargestellten Trägerelement, welches den einen oder die mehreren Reflektoren 1, 2 trägt. Grundsätzlich ist es auch denkbar, den Halter nur in einer Führung verschiebbar zu lagern, im Sinne einer hohen Stabilität ist aber die Verwendung von zwei Schienen vorzuziehen.

Weiters sei hier noch angemerkt, dass natürlich der Linsenhalter 4' mit den Kufen 20, 20' einstückig ausgebildet sein kann, und ebenso auch die Kufen 20, 20' oder der Linsenhalter 4' mit dem Zahnkranz 13 einstückig sein können.

Wie der Beschreibungseinleitung und den Ansprüchen zu entnehmen, kann es auch von Vorteil sein, die Linse alternativ oder zusätzlich zu dem Verschwenken in einer horizontalen Richtung noch in einer vertikalen Richtung zu verschwenken, um so alternativ oder zusätzlich zu einer Kurvenlicht-Funktion die Leuchtweite zu regulieren. Allgemein lässt sich hier feststellen, dass typische Verschwenkbereiche um eine Vertikalschwenkachse Z bei etwa 5° - 10° Grad ausgehend von einer im wesentlichen waagrechten Ausgangsstellung der Linse zu sehr guten Lichtverteilungen mit nur geringen Verzerrungen führen, dass allerdings auch noch Verschwenkbewegungen bis zu ± 20° mit geringen Verzerrungen des Lichtbildes in den Randbereichen möglich sind. Zu beachten ist dabei wiederum, dass die Drehachse für die Vertikalschwenkbewegung durch den reflektorseitigen Brennpunkt der Linse bzw. nahe an diesem vorbei verläuft, da ansonsten keine scharfen Abbildungen der Lichtverteilung erzielt werden können.

Ausgehend von einer Ausgestaltung der Erfindung nach den Figuren 1 - 3 ist es denkbar, beispielsweise die Drehachsen 10 für die Arme 50, 51 des Linsenhalters 4 an einem Gestell anzubringen, welches selbst um eine horizontale Vertikalschwenkachse Y verschwenkbar ist, um so zusätzlich zu der Kurvenlicht-Funktion auch noch die Leuchtweite zu regulieren. Ebenso ist es denkbar, im Falle des in Führungen 21, 21' geführten Linsenhalters 4' nach den Figuren 4 und 5, diese Führungen 21, 21' an einem entsprechend verschwenkbaren Gestell anzubringen.

Falls nur eine Leuchtweitenregulierung gewünscht ist, besteht eine Möglichkeit der Realisienmg eines erfindungsgemäßen Scheinwerfers darin, ausgehend von den Figuren 1-3 bzw. Figur 4 und 5, die Arme 50, 51 bzw. die Kufen 20, 20' und die Führungen 21, 21' sowie allfällige Antriebe und Getriebe um 90° um die optische Achse X gedreht zu denken und in dieser Position entsprechend am Reflektor/Tragegestell zu montieren, sodass eine Vertikal verschwenkbewegung der Linse um eine horizontale Achse Z, die im wesentlichen in einer Ebene normal auf die optische Achse X liegt, möglich ist.

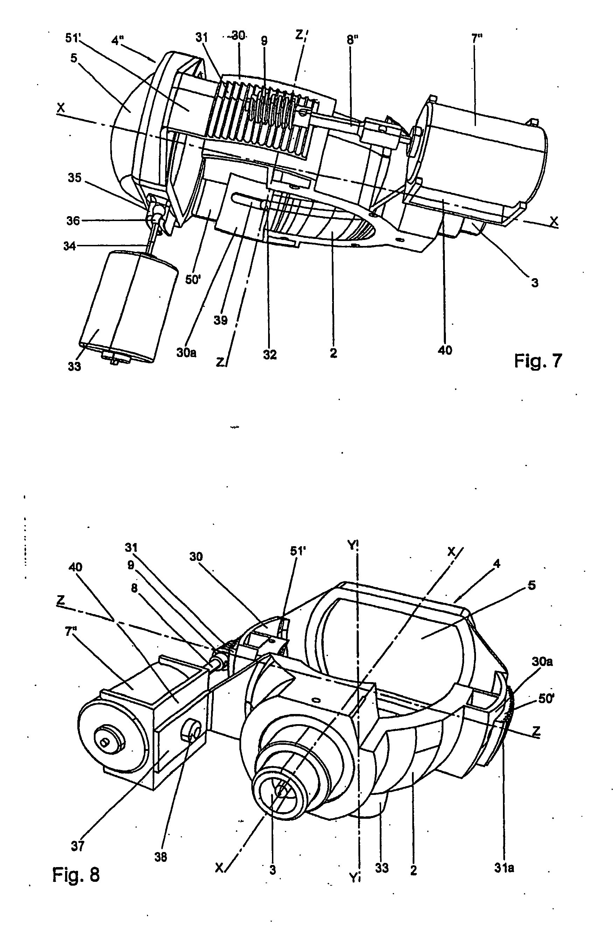

Eine besonders vorteilhafte Ausführungsform der Erfindung, bei welcher sowohl eine Horizontal- als auch eine Vertikajverschwenkbewegung möglich sind, ist weiters in den Figuren 6 - 8 dargestellt.

An einer Außenseite eines Reflektors, in diesem Fall dem Abblendlichtreflektor 2, sind seitlich, d. h. links und rechts, Kugelabschnittsflächen 30, 30a ausgebildet, die mit dem Reflektor 2 fest verbunden oder einstückig mit diesem ausgebildet sind. In den Kugelabschnittsflächen 30, 30a sind Schlitze 39 vorgesehen, die als Führung für den schwenkbaren Linsenhalter 4" dienen. Der Linsenhalter 4", der wie üblich getrennt von der Linse 5 oder mit dieser einstückig ausgebildet sein kann, weist seitlich zwei nach hinten springende Arme 50', 51' auf, die in ihren mit den Kugelflächen 30, 30a des Reflektors 2 zusammenwirkenden Bereichen eine entsprechend ausgestaltete, diesen angepasste konzentrische Form aufweisen. Um dabei einen Zusammenbau des Scheinwerfers auf einfache Weise zu erlauben, ist es günstig, wenn die beiden Arme 50', 51' federnd ausgebildet sind, sodass diese leicht auf die Kugelflächen 30, 30a aufgeschoben werden können und im befestigten Zustand gegen diese gedrückt sind.

Die Kugelflächen 30, 30a sowie die mit diesen zusammenwirkenden Bereiche der Arme 50', 51' sind so ausgelegt, dass der Mittelpunkt dieser Kugel genau im Brennpunkt der Linse bzw. auf einer Vertikalen durch den Brennpunkt der Linse liegen.

Weiters weisen die Arme 50', 51' an ihren den Kugelflächen 30, 30a zugewandten Bereichen je einen Führungsbolzen 32 auf, der in einen Führungsschlitz 39 eingreift. Auf diese Weise wird der Linsenhalter 4" einerseits um eine vertikale Achse verschwenkbar, wobei sich dann der in der gezeigten Ausführungsform zylindrische Führungsbolzen 39 eines Armes in dem Führungsschlitz nach hinten und der andere Bolzen nach vorne bewegt, und gleichzeitig ist auch ein horizontales Verschwenken des Linsenhalters nach oben oder unten um die Führungsbolzen 39 möglich.

Für das Verschwenken des Linsenhalters 4" um die Horizontalschwenkachse Y ist wieder ein Antrieb 7", beispielsweise ein Schritt- oder Gleichstrommotor vorgesehen, der über eine drehbare Antriebswelle 8" eine Schnecke 9" dreht, die in einen an einem Arm 51' des Linsenhalters 4" befestigten oder mit diesem einstückig hergestellten Gewindestruktur, etwa eine Verzahnung 31 eingreift und so den Linsenhalter 4" bzw. die Linse 5 um einen Horizontalwinkel um die Verschwenkachse Y nach links oder rechts verschwenkt. Prinzipiell ist aber wieder auch hier die Verwendung von Linear(schritt)motoren, Dreh- oder Hubmagneten oder piezomechanischen Antrieben etc. möglich

Die Höhenverschwenkung um eine Achse Z, die durch die momentane Position der Führungsbolzen 39 gebildet ist, erfolgt in der gezeigten Ausführungsform mit einem eigenen Antrieb 33, bei dem es sich beispielsweise um einen Linearmotor handelt, sodass sich dessen Antriebswelle 34 in einer Linearrichtung aus dem Motor heraus oder in diesen hinein bewegt. Die Antriebswelle 34 weist in ihrem äußeren, dem Linsenhalter 4" zugewandten Bereich einen Kugelkopf 36 auf, der in eine entsprechend ausgebildete Führungsschiene 35, die an einer Unterseite des Linsenhalters 4" angebracht ist, eingreift. Wie man insbesondere aus der Fig. 9 gut erkennen kann, ist dabei die Führungsschiene 35 für den Kugelkopf 36 im wesentlichen kreisförmig - mit dem Mittelpunkt in der Nähe oder auf einer Vertikalen durch den Brennpunkt der Linse -gebogen ausgebildet, sodass bei einem Horizontalverschwenken des Linsenhalters 4" diese Bewegung nicht durch den Kugelkopf 36 behindert ist und der Linsenhalter 4" gleichzeitig über die vertikale und die horizontale Schwenkachse bewegt werden kann.

Durch die Vertikalverschwenkung der Linse kann der Scheinwerfer hinsichtlich einer Regulierung der Leuchtweite verwendet werden, wozu in der Regel ein Verschwenken von wenigen Graden, maximal ± 5° ausreichend ist. Verwendet man die Vertikalverschwenkung dazu, um das Lichtbild je nach Geschwindigkeit und Fahrsituation zu variieren, etwa für ein Autobahn- oder Stadtlicht, so sind Verschwenkbereiche von ± 10°, wobei allerdings grundsätzlich auch noch größere Verschwenkwinkel realisierbar sind. Zu achten ist hier insbesondere natürlich wieder darauf, dass die gesetzlichen Vorgaben erfüllt sind.

Damit der Antrieb 7" für die Horizontalverschwenkbewegung eine vertikale Verschwenkbewegung des Linsenhalters 4" nicht behindert, ist es zweckmäßig, wenn dieser beweglich gelagert ist, sodass er sich bei einer Vertikalschwenkbewegung des Linsenhalters 4" mitbewegen kann. Bei der gezeigten Ausführungsform ist dazu der Antrieb 7" in einem Haltegestell 40 gehalten, welches beispielsweise um eine Achse 38 drehbar gelagert ist. Die Achse 38 ist dabei an einem Fortsatz 37 des Reflektors befestigt, die Befestigung kann aber auch beispielsweise an einem Trageelement für den Reflektor erfolgen.

Gemäß der Zeichnung wird der Motor 7" über den von der Verzahnung 31 auf die Schnecke 9" ausgeübten Druck, der bei einem Verschwenken des Linsenhalters 4" nach oben oder unten entsteht, um die Achse 38 verdreht, wozu die Lagerung des Motors 7" entsprechend leichtgängig sein muss. Es spricht aber vom technischen Standpunkt auch nichts dagegen, auch das Verschwenken des Motors 7" selbst über einen weiteren Antrieb zu lösen, aller dings wird dadurch das Gesamtsystem teurer und auch komplizierter.

Es soll darauf hingewiesen werden, dass die an Hand der Figuren beschriebenen Antriebe nur als beispielhaft anzusehen sind. So ist es durchaus wiederum auch denkbar, bei der zuletzt beschriebenen Ausführungsform der Erfindung die Horizontalverschwenkbewegung über einen Servomotor zu realisieren, und auch die Bewegungsübertragung auf den Linsenhalter 4" muss nicht notwendigerweise über eine Schnecke und einen von diesem angetriebenen Zahnkranz verwirklicht sein. Auch ist es denkbar, die Horizontalverschwenkbewegung - ähnlich wie oben beschrieben für die Vertikalverschwenkbewegung - mittels eines Linearmotors und einem Gestänge zu ermöglichen.

Umgekehrt ist natürlich auch die Vertikalverschwenkbewegung nicht nur mittels eines Linearmotors realisierbar, es ist auch die Verwendung eines Schritt-, Servo- oder Gleichstrommotors mit einer verdrehbaren Antriebswelle denkbar, wobei je nach Art und Ort des Antriebs ein Getriebe zum Antreiben des Linsenhalters entsprechend auszubilden ist.

Weiters sei hier noch angemerkt, dass natürlich auch die Platzierung der Antriebe in den Figuren 1 - 9 nur als beispielhaft anzusehen ist, insbesondere kann ein Antrieb für die Vertikalverschwenkbewegung genauso an einer Oberseite des Reflektors angeordnet sein und so entsprechend mit dem Linsenhalter zusammenwirken.

## Patentansprüche

1. Fahrzeugscheinwerfer für dynamisches Kurvenlicht mit
- zumindest einem Reflektor (1, 2),
- zumindest einer dem zumindest einen Reflektor (1, 2) zugeordneten Lichtquelle (3),
- zumindest einer um zumindest eine Verschwenkachse (Y) in Bezug auf den Reflektor (1, 2) verschwenkbaren Linse (5), wobei die Linse (5) von einem Linsenhalter (4, 4', 4") gehalten ist, welcher um die zumindest eine Verschwenkachse (Y) verschwenkbar ist, und wobei die zumindest eine Verschwenkachse (Y) durch den Brennpunkt der Linse (5) bzw. in geringem Abstand zu diesem verläuft,
wobei
die zumindest eine Verschwenkachse eine im Wesentlichen vertikale Horizontalverschwenkachse (Y) ist, um welche die Linse (5) mit einem Antrieb (7, 7', 7") zur Anpassung der Lichtverteilung entsprechend einem Straßenverlauf verschwenkbar ist.

2. Scheinwerfer nach Anspruch 1, **dadurch gekennzeichnet, dass** der Linsenhalter (4, 4', 4") und die Linse (5) einstückig ausgebildet sind.

3. Scheinwerfer nach Anspruch 1 oder 2, **dadurch gekennzeichnet, dass** die Linse (5), ausgehend von einer Mittelstellung für Geradeausfahrt, beiderseits in einem Winkelbereich von 0° bis 20° um die vertikale Horizontalverschwenkachse (Y) verschwenkbar ist.

4. Scheinwerfer nach einem der Ansprüche 1 bis 3, **dadurch** gekenntzeichnet dass der Linsenhalter (4') in zumindest einer Führung (21, 21') um die zumindest eine Achse (Y) verschiebbar gelagert ist.

5. Scheinwerfer nach Anspruch 4, **dadurch gekennzeichnet dass** die Führung (21, 21') die Form eines Kreisbogens hat, dessen Mittelpunkt auf der Schwenkachse (Y liegt, wobei die Führung (21, 21') in einer Ebene liegt, deren Normalvektor parallel zu der Schwenkachse (Y) verläuft.

6. Scheinwerfer nach Anspruch 4 oder 5, **dadurch gekennzeichnet, dass** der Linsenhalter (4') zumindest eine Kufe (20) hat, welche entsprechend der Form der Führung (21, 21') ausgebildet ist und in dieser in Eingriff verschiebbar gelagert ist.

7. Scheinwerfer nach einem der Ansprüche 1 bis 3, **dadurch gekennzeichnet, dass** der Linsenhalter (4) an dem zumindest einen Reflektor (1, 2) und/oder einem Tragelement drehbar befestigt ist.

8. Scheinwerfer nach Anspruch 7, **dadurch gekennzeichnet, dass** der Linsenhalter (4) zumindest einen von der Linse (5) im wesentlichen entgegen der Lichtrichtung gerichteten Arm (50, 51) hat, welcher an dem Reflektor/Tragelement über zumindest eine Stift-Loch Verbindung (10, 11) um die zumindest eine Verschwenkachse (Υ) verschwenkbar befestigt ist.

9. Scheinwerfer nach einem der Ansprüche 1 bis 3, **dadurch gekennzeichnet dass** der Linsenhalter in zumindest einer Führung um eine Verschwenkachse (Y) verschwenkbar ist, wobei die Führung an einem Tragegestell befestigt oder mit diesem einstückig ausgebildet ist, welches um eine Achse verschwenkbar ist, die normal auf die Verschwenkachse für die Führung verläuft.

10. Scheinwerfer nach Anspruch 9, **dadurch gekennzeichnet dass** die Verschwenkachse eine Vertikalachse/eine in einer Ebene normal auf die optische Achse liegende Horizontalachse ist, und dass die Drehachse für das Tragegestell eine in einer Ebene normal auf die optische Achse liegende Honzontalachse/eine Vertikalachse ist

11. Scheinwerfer nach Anspruch 10, **dadurch gekennzeichnet, dass** die Führung die Form eines Kreisbogens hat, dessen Mittelpunkt auf der Verschwenkachse liegt, und wobei die Führung in einer Ebene liegt, deren Normalvektor parallel zu der Schwenkachse verläuft.

12. Scheinwerfer nach Anspruch 10 oder 11, **dadurch gekennzeichnet, dass** der Linsenhalter zumindest eine Kufe hat welche entsprechend der Form der Führung ausgebildet ist und in dieser in Eingriff verschiebbar gelagert ist.

13. Scheinwerfer nach einem der Ansprüche 1 bis 3, **dadurch gekennzeichnet, dass** der Linsenhalter an dem zumindest einen Reflektor und/oder einem Tragelement drehbar befestigt ist, der Linsenhalter zumindest einen von der Linse im wesentlichen entgegen der Lichtrichtung gerichteten Arm hat, welcher an dem Reflektor/Tragelement über zumindest eine Stift-Loch-Verbindung um eine Verschwenkachse verschwenkbar verbunden ist, und der zumindest eine Stift oder das zumindest eine Loch an einem Tragegestell befestigt oder mit diesem einstückig ausgebildet ist, wobei das Tragegestell um eine auf die Verschwenkachse normale Achse verschenkbar ist.

14. Scheinwerfer nach einem der Ansprüche 1 bis 3, **dadurch** gekenntzeichnet dass der zumindest eine Reflektor (2) und/oder ein Trageelement zumindest bereichsweise als Kugelfläche (30, 30a) ausgebildet ist, der Linsenhalter (4") zumindest einen nach hinten springenden Arm (50', 51') hat, welcher in einem mit der Kugelfläche (30, 30a) zusammenwirkenden Bereich des Arms (50', 51') konzentrisch ausgebildet ist, und der zumindest eine Arm (50', 51') über eine Stift-Schlitz-Verbindung (32, 39) horizontal und vertikal verschwenkbar gelagert ist.

15. Scheinwerfer nach Anspruch 14, **dadurch gekennzeichnet, dass** der Mittelpunkt der Kugelfläche (30, 30a) und der mit dieser zusammenwirkende Bereich des Ames (50', 51') auf einer Vertikalen durch den Brennpunkt der Linse (5) oder nahe dieser Geraden liegt.

16. Scheinwerfer nach einem der Ansprüche 1 bis 15, **dadurch gekennzeichnet, dass** eine Verschwenkung des Linsenhalters (4, 4', 4") mit zumindest einem Antrieb (7, 7', 7", 33) erfolgt.

17. Scheinwerfer nach Anspruch 16, **dadurch gekennzeichnet, dass** der Antrieb (7, 7', 7", 33) ein Schrittmotor ist.

18. Scheinwerfer nach Anspruch 17, **dadurch gekennzeichnet, dass** der Antrieb (7, 7', 7", 33) ein Servomotor ist.

19. Scheinwerfer nach Anspruch 17 oder 18, **dadurch gekennzeichnet, dass** der Linsenhalter (4, 4') mit dem Antrieb (7, 7') über ein Getriebe (8, 9, 12, 13; 8', 9', 13'; 8", 9", 31) verbunden ist.

20. Scheinwerfer nach einem der Ansprüche 1 bis 19, **dadurch gekennzeichnet, dass** zur Ermittlung der Verschwenkposition der Linse zumindest ein Sensor vorgesehen ist.

21. Scheinwerfer nach Anspruch 20, **dadurch gekennzeichnet, dass** der Sensor aus zumindest zwei Sensorelementen (15, 16; 18, 19) besteht, wobei ein erstes Sensorelement (16; 18) fest mit dem Linsenhalter (4) oder an einem mit diesem verbundenen Element angeordnet ist.

22. Scheinwerfer nach Anspruch 20 oder 21, **dadurch gekennzeichnet, dass** der Sensor (18, 19) ein digitaler Sensor ist.

## Claims

1. Vehicle headlight for dynamic adaptive lighting with
- at least one reflector (1,2),
- at least one light source (3) assigned to the minimum one reflector (1, 2)
- at least one lens (5) rotating in relation to the reflector (1, 2) about at least one swivelling axle (Y), whereby the lens (5) is held by a lens holder (4, 4', 4"), which rotates about the minimum one swivelling axle (Y), and whereby the minimum one swivelling axle (Y) runs through the focal point of the lens (5) or at a short distance from it.
whereby
the minimum one swivelling axle is a basically vertical, horizontally-rotating axle (Y), about which the lens (5) - with a drive (7, 7', 7") for adjusting the light dispersal according to a path of the road - can be rotated.

2. Headlight according to claim 1, **characterised in that** the lens holder (4, 4', 4") and the lens (5) are constructed as one piece.

3. Headlight according to claim 1 or 2, **characterised in that** the lens (5), based on a median position for travel straight ahead, can be rotated on both sides within a angle range of 0° to 20° about the vertical, horizontally-rotating axle (Y).

4. Headlight according to one of the claims 1 to 3, **characterised in that** that lens holder (4') is mounted to be moveable in at least one channel (21, 21') around the minimum one axle (Y).

5. Headlight according to claim 4, **characterised in that** the channel (21, 21') has the shape of a circular arc, the midpoint of which lies on the swivelling axle (Y), whereby the channel (21, 21') lies on a level, the normal vector of which runs parallel to the swivelling axle (Y).

6. Headlight according to claim 4 or 5, **characterised in that** the lens holder (4') has at least one runner (20), which is constructed according to the shape of the channel (21, 21') and is mounted so it can be moved in a circuit.

7. Headlight according to one of the claims 1 to 3, **characterised in that** the lens holder (4) is fixed to the minimum one reflector (1, 2) and/or a carrying element so it can be rotated.

8. Headlight according to claim 7, **characterised in that** the lens holder (4) has at least one arm (50, 51) directed basically against the light direction of the lens (5) which is fixed to the reflector / carrying element by at least one pinhole connection (10, 11) so it can be rotated about the minimum one swivelling pivot (Y).

9. Headlight according to one of the claims 1 to 3, **characterised in that** the lens holder can be rotated in at least one channel around a swivelling axle (Y), whereby the channel is fixed to or constructed in one piece with a supporting frame, which can be rotated about an axle running normal to the swivelling axle.

10. Headlight according to one of the claim 9, **characterised in that** the rotating axle is a vertical axle / a horizontal axle lying on a level normal to the optical axle, and that the pivot for the supporting frame is a horizontal axle lying on a level normal to the optical axle / a vertical axle.

11. Headlight according to claim 10, **characterised in that** the channel has the shape of a circular arc, the midpoint of which lies on the swivelling axle, and whereby the channel lies on a level with a normal running parallel to the swivelling axle.

12. Headlight according to claim 10 or 11, **characterised in that** the lens holder has at least one runner which is constructed to the shape of the channel and is moveably mounted in it.

13. Headlight according to one of the claims 1 to 3, **characterised in that** the lens holder is fixed to the minimum one reflector and/or a carrying element so it can be rotated, the lens holder has at least one arm directed basically against the light direction from the lens, an arm which is joined to the reflector / carrying element by at least one pinhole connection so that it can be rotated about a swivelling axle, and the minimum one pin or the minimum one hole is fixed to or constructed as one piece with a supporting frame, such that the supporting frame can be rotated on a axis normal to the swivelling axis.

14. Headlight according to one of the claims 1 to 3, **characterised in that** the minimum one reflector (2) and/or a carrying element is constructed at least partially as a sphere (30, 30a), the lens holder (4") has at least one arm springing backwards (50', 51'), which is constructed concentrically together with the area of the arm (50', 51') working together with the spherical surface (30, 30a), and the minimum one arm is mounted so it can be rotated horizontally and vertically over a pinhole connection (32, 39).

15. Headlight according to claim 14, **characterised in that** the midpoint of the spherical surface and the area of the arm (50', 51') working with it lies on a vertical through the lens (5) focal point or near to this line.

16. Headlight according to one of the claims 1 to 15, **characterised in that** a rotation of the lens holder (4, 4', 4") takes place with at least one drive (7, 7', 7", 33).

17. Headlight according to claim 16, **characterised in that** the drive (7, 7', 7", 33) is a multiphase motor.

18. Headlight according to claim 17, **characterised in that** the drive (7, 7', 7", 33) is a servomotor.

19. Headlight according to one of the claims 1 to 18, **characterised in that** the lens holder (4, 4') is connected to the drive (7, 7') by a set of gears (8, 9, 12, 13; 8' 9' 13'; 8", 9", 31).

20. Headlight according to one of the claims 1 to 19, **characterised in that** at least one sensor is provided for identifying the rotational position of the lens.

21. Headlight according to claim 20, **characterised in that** the sensor consists of at least two sensor elements (15, 16; 18, 19), such that a first sensor element (16; 18) is located fast with the lens holder (4) or on an element joined to it.

22. Headlight according to claim 20 or 21, **characterised in that** the senor (18, 19) is a digital sensor.

## Revendications

1. Phare de véhicule pour un éclairage dynamique des virages, avec
- au moins un réflecteur (1, 2),
- au moins une source lumineuse (3) associée au au moins un réflecteur (1, 2),
- au moins une lentille (5), susceptible de pivoter autour d'au moins un axe de pivotement (Υ) par rapport au réflecteur (1, 2), la lentille (5) étant maintenue par un support de lentille (4, 4', 4"), qui est susceptible de pivoter autour du au moins un axe de pivotement (Υ) et le au moins un axe de pivotement (Υ) s'étendant à travers le foyer de la lentille (5), ou à un faible écart de ce dernier,
et
- le au moins un axe de pivotement étant un axe de pivotement horizontal sensiblement vertical (Υ), autour duquel la lentille (5) est susceptible de pivoter avec un entraînement (7, 7, 7"), pour adapter la diffusion lumineuse au trajet d'une route.

2. Phare selon la revendication 1, **caractérisé en ce que** le support de lentille (4, 4', 4") et la lentille (5) sont conçus en monobloc.

3. Phare selon la revendication 1 ou 2, **caractérisé en ce que** la lentille (5) est susceptible de pivoter de part et d'autre dans une plage angulaire de 0° à 20° autour de l'axe de pivotement horizontal vertical (Υ), à partir d'une position centrale pour la conduite en ligne droite.

4. Phare selon l'une quelconque des revendications 1 à 3, **caractérisé en ce que** le support de lentille (4') est logé de façon déplaçable dans un guidage (21, 21'), autour du au moins un axe (Υ).

5. Phare selon la revendication 4, **caractérisé en ce que** le guidage (21, 21') a la forme d'un arc de cercle, dont le centre se situe sur l'axe de pivotement (Υ), le guidage (21, 21') se situant dans un plan de secteur normal s'étend à la parallèle de l'axe de pivotement (Υ).

6. Phare selon l'une quelconque des revendications 4 ou 5, **caractérisé en ce que** le support de lentille (4') dispose d'au moins une flasque (20) qui est conçue en fonction de la forme du guidage (21, 21') et qui est logée de façon déplaçable en engagement dans ce dernier.

7. Phare selon l'une quelconque des revendications 1 à 3, **caractérisé en ce que** le support de lentille (4) est fixé en rotation sur le au moins un réflecteur (1, 2) et/ou un élément porteur.

8. Phare selon la revendication 7, **caractérisé en ce que** le support de lentille (4) a au moins un bras (50, 51) dirigé à partir de la lentille (5), sensiblement à l'encontre de la direction de la lumière, qui est fixé de façon à pouvoir pivoter autour du au moins un axe de pivotement (Υ) sur le réflecteur/élément porteur par l'intermédiaire d'au moins un assemblage cheville/trou (10, 11).

9. Phare selon l'une quelconque des revendications 1 à 3, **caractérisé en ce que** le support de lentille est susceptible de pivoter dans au moins un guidage autour d'un axe de pivotement (Υ), le guidage étant fixé sur un cadre porteur ou conçu en monobloc avec ce dernier, qui est susceptible de pivoter autour d'un axe qui s'étend normalement vers l'axe de pivotement pour le guidage.

10. Phare selon la revendication 9, **caractérisé en ce que** l'axe de pivotement est un axe vertical/ un axe horizontal situé dans un plan normal sur l'axe optique, et **en ce que** l'axe de rotation pour le cadre porteur est un axe horizontal situé dans un plan normal sur l'axe optique/un axe vertical.

11. Phare selon la revendication 10, **caractérisé en ce que** le guidage a la forme d'un arc de cercle, dont le point central se situe sur l'axe de pivotement, et le guidage se situant dans un plan dont le vecteur normal s'étend à la parallèle de l'axe de pivotement.

12. Phare selon la revendication 10 ou 11, **caractérisé en ce que** le support de lentille comporte au moins une flasque, qui est conçue en fonction de la forme du guidage et qui est logée de façon déplaçable, en engagement dans ce dernier.

13. Phare selon l'une quelconque des revendications 1 à 3, **caractérisé en ce que** le support de lentille est fixé en rotation sur le au moins un réflecteur et/ou un élément porteur, **en ce que** le support de lentille a au moins un bras dirigé à partir de la lentille, sensiblement à l'encontre de la direction de la lumière, qui est fixé sur le réflecteur/élément porteur par l'intermédiaire d'au moins un assemblage cheville/trou, de façon à pouvoir pivoter autour d'un axe de pivotement et **en ce que** la au moins une cheville ou le au moins un trou est fixé(e) sur un cadre porteur ou est conçu(e) en monobloc avec ce dernier, le cadre porteur étant susceptible de pivoter autour d'un axe normal sur l'axe de pivotement.

14. Phare selon l'une quelconque des revendications 1 à 3, **caractérisé en ce que** au moins un réflecteur (2) et/ou un élément porteur est conçu au moins par régions en tant que surface sphérique (30, 30a), **en ce que** le support de lentille (4") comporte au moins un bras saillant vers l'arrière (50', 51'), qui dans une région du bras (50', 51') coopérant avec la surface sphérique (30, 30a) est conçu sous forme concentrique, et **en ce que** le au moins un bras (50', 51') est logé de façon à pouvoir pivoter à l'horizontale et à la verticale par l'intermédiaire d'un assemblage cheville/fente (32, 39).

15. Phare selon la revendication 14, **caractérisé en ce que** le point central de la surface sphérique (30, 30a) et la région du bras (50', 51') coopérant avec cette dernière se situent sur le verticale à travers le foyer de la lentille (5) ou à proximité de cette droite.

16. Phare selon l'une quelconque des revendications 1 à 15, **caractérisé en ce qu'**un pivotement du support de lentille (4, 4', 4") est assuré par au moins un entraînement (7, 7', 7", 33) .

17. Phare selon la revendication 16, **caractérisé en ce que** l'entraînement (7, 7, 7', 33) est un moteur pas à pas.

18. Phare selon la revendication 17, **caractérisé en ce que** l'entraînement (7, 7, 7', 33) est un servomoteur.

19. Phare selon la revendication 17 ou 18, **caractérisé en ce que** le support de lentille (4, 4') est relié avec l'entraînement (7, 7') par l'intermédiaire d'une transmission (8, 9, 12, 13 ; 8', 9', 13' ; 8", 9", 31) .

20. Phare selon l'une quelconque des revendications 1 à 19, **caractérisé en ce que** pour déterminer la position de pivotement de la lentille, il est prévu au moins un capteur.

21. Phare selon la revendication 20, **caractérisé en ce que** le capteur consiste en au moins deux éléments de capteurs (15, 16; 18, 19) un premier élément de capteurs (16 ; 18) étant fixement relié avec le support de lentille (4) ou avec un élément relié avec ce dernier.

22. Phare selon la revendication 20 ou 21, **caractérisé en ce que** le capteur (18, 19) est un capteur numérique.
